# EUROPÄISCHE PATENTANMELDUNG

(11) **EP 0 732 053 A1**
(43) Veröffentlichungstag der Anmeldung: **18.09.1996**
(21) Anmeldenummer: 96104161.3
(22) Anmeldetag: 15.03.1996
(51) Int. Cl.: A21C 9/04, A23P 1/08

(54) **Verteilvorrichtung zur gleichmässigen Verteilung eines Produktes auf einer Fläche**

(30) Priorität: 17.03.1995 DE 19509886
(71) Anmelder: MULTIPOND WÄGETECHNIK GMBH, 84478 Waldkraiburg (DE)
(72) Erfinder:
(74) Vertreter: Prüfer, Lutz H., Dipl.-Phys.

(57) **Zusammenfassung**

Es wird eine Vorrichtung zur gleichmäßigen Verteilung einer vorbestimmten Menge eines Produktes, das aus zur Verklumpung neigenden diskreten Teilchen besteht, auf einer vorgegebenen Fläche geschaffen. Die Vorrichtung ist insbesondere für die Anwendung in der Nahrungsmittelindustrie, genauer für die Herstellung von Pizzas, Fertigmenüs und ähnlichen Backwaren gedacht. Damit eine einwandfreie gleichmäßige Verteilung erreicht wird, ist ein sich in Arbeitsstellung vertikal erstreckender Vereinzelungsabschnitt (1) aus einem Gehäuse (4) mit einer länglichen Gehäusewand mit einer oben liegenden Zufuhröffnung (7) und einer dieser gegenüberliegenden Ausgangsöffnung (8) vorgesehen. In dem Vereinzelungsabschnitt ist eine Anzahl von sich in einem Abstand von der Zufuhröffnung (7) in das Innere des Gehäuses (4) und damit in den Fallweg des Produktes erstreckenden und in Umfangsrichtung gegeneinander versetzten länglichen Federelementen (16) vorgesehen. Diese bewirken beim Aufprall des zu verteilenden Produktes ein Wippen und damit Zerteilen des Produktes.

## Beschreibung

Die Erfindung betrifft eine Verteilvorrichtung zur gleichmäßigen Verteilung einer vorbestimmten Menge eines Produktes auf eine vorgegebene Fläche. Die Verteilvorrichtung ist insbesondere zur Anwendung in der Nahrungsmittelindustrie, bei der Herstellung von Pizzas und ähnlichen Fertigmenüs und Backwaren vorgesehen.

Bei der Herstellung von Pizzas, Fertigmenüs und Backwaren besteht das Problem der gleichmäßigen Belegung und Verteilung, bei der genau vorbestimmte Mengen eines oder mehrerer unterschiedlicher Produkte, die wie beispielsweise geriebener, geraspelter oder gestiftelter Käse zum Kleben bzw. Klumpen neigen, auf eine genau definierte Fläche, z.B. den Pizzaboden, aufzubringen sind, wobei die Ränder dieser Bodenfläche freigehalten werden sollen. In bekannter Weise wird zu diesem Zweck der zu bestreuende Boden unter einem sich quer zur Vorschubrichtung des Bodens erstreckenden Zuführungsschlitz bewegt. Eine genaue Steuerung der Gewichtsmenge des Produktes ist wegen der kontinuierlichen Beschichtungsweise und der daraus resultierenden Dichteschwankungen nicht möglich. Ferner können die Randzonen z.B. von Pizzas nicht freigehalten werden. Die bei einer kreisrunden Pizza nicht aufgenommenen Produktteile müssen zurückgeführt werden, was zu hygienischen Problemen führen kann.

Aufgabe der Erfindung ist es, eine Verteilvorrichtung der eingangs beschriebenen Art zu schaffen, mit der eine gleichmäßige Beschickung vorbestimmter Produktflächen möglich ist.

Diese Aufgabe wird durch eine Verteilvorrichtung nach Anspruch 1 gelöst.

Weiterbildungen der Erfindung sind in den Unteransprüchen gekennzeichnet.

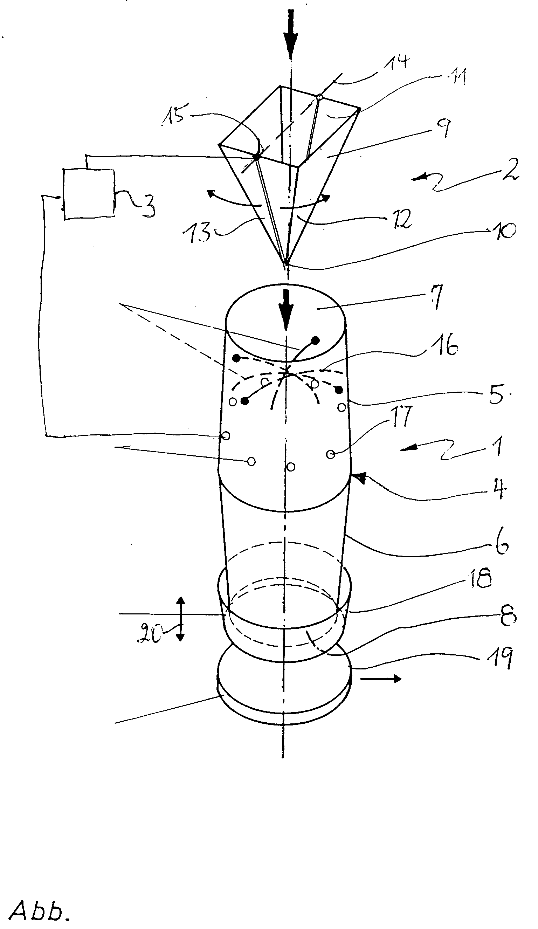

Weitere Merkmale und Zweckmäßigkeiten der Erfindung ergeben sich aus der Beschreibung von Ausführungsbeispielen anhand der Figur.
Die Figur zeigt eine schematische Darstellung der Vorrichtung.

Die Verteilvorrichtung umfaßt einen Vereinzelungsabschnitt 1, einen Bereitstellungsabschnitt 2 sowie eine Steuerung 3.

Der Vereinzelungsabschnitt 1 weist ein Gehäuse 4 mit einem eingangsseitigen ersten Abschnitt 5 und einem ausgangsseitigen zweiten Abschnitt 6 auf. Die beiden Abschnitte sind jeweils als längliche kegelstumpfartige Rohrabschnitte ausgebildet und mit ihrem jeweiligen Basisteil miteinander verbunden. In Arbeitsstellung ist das Gehäuse so angeordnet, daß die Längsachse des Gehäuses, die gleichzeitig die Symmetrieachse ist, sich in vertikaler Richtung erstreckt. Das obere Ende des ersten Abschnittes 5 ist offen und bildet die Zufuhröffnung 7, das der Zufuhröffnung gegenüber liegende untere Ende des Gehäuses ist ebenfalls offen und bildet die Ausgangsöffnung 8. Das Gehäuse 4 ist somit als ein symmetrisch zu der mit der Symmetrieachse zusammenfallenden Fallinie ausgebildeter Verteiltrichter ausgebildet, der sich von oben nach unten bis zur Mitte etwas erweitert und dann bis unten wieder enger wird.

Der Bereitstellungsabschnitt 2 weist einen koaxial zur Symmetrieachse des Gehäuses 4 angeordneten Bereitstellungsbehälter 9 auf. Dieser hat die Form einer derart auf dem Kopf stehenden Pyramide, daß die der Zufuhröffnung 7 zugewandte Spitze 10 und der Mittelpunkt der der Zufuhröffnung 7 abgewandten Pyramidengrundfläche 11 auf der Symmetrieachse des Gehäuses 4 liegen. Das Gehäuse des Bereitstellungsbehälters weist zwei Hälften 12 und 13 auf, die durch eine Ebene voneinander geteilt sind, die durch eine parallel zum Rand der Grundfläche gehende Mittellinie und der Spitze 10 aufgespannt wird. Entlang der sich parallel zur Grundfläche erstreckenden Mittellinie 14 sind die beiden Hälften über einen schematisch angezeigten Antrieb um eine mit der Mittellinie 14 zusammenfallende Achse schwenkbar miteinander verbunden. Die Grundfläche 11 ist in der gezeigten Weise nach oben offen und dient als Aufnahmeöffnung für über eine Wiegeeinrichtung zuzuführende zu verteilende Produkte. Die Produkte werden von der Waage in das Innere des Bereitstellungsbehälters 9 zugeführt, solange sich dieser in der in der Figur gezeigten geschlossenen Stellung befindet. Der Bereitstellungsbehälter 9 ist somit als ein speziell geformter konischer Zwischenbehälter ausgebildet, der unterhalb der Auslauföffnung der Kombinationswaage in eng begrenztem Volumen symmetrisch zu der mit der Symmetrieachse zusammenfallenden Fallinie angeordnet ist.

Wie aus der Figur ersichtlich ist, sind in einem Abstand von der Zufuhröffnung 7 in der Gehäusewandung in Umfangsrichtung verteilt eine Mehrzahl von sich kranzförmig im wesentlichen in radialer Richtung erstreckender federnder Drähte 16 angeordnet. Es handelt sich dabei vorzugsweise um Drähte aus rostfreiem Federstahl mit einem Durchmesser in der Größenordnung von 0,5 - 1,5mm und vorzugsweise in der Größenordnung von 1mm. Die Federdrähte haben eine Länge die größer als der Durchmesser des ersten Abschnittes in diesem Bereich ist, und die vorzugsweise nahezu dem zweifachen Durchmesser entspricht. Die Federdrähte sind an ihrem einen Ende so fest mit dem Inneren der Wandung des ersten Abschnittes 5 verbunden, daß sie etwa senkrecht aus der Wandung zur Mitte hin austreten und an der gegenüberliegenden Wandung nach unten zur Ausgangsöffnung 8 hin sich erstrecken und mehr oder weniger lose an der gegenüberliegenden Wandung anliegen und somit eine Wippbewegung ausführen können, wenn von oben eine Kraft auf den Federdraht ausgeübt wird. Die federnden Drähte sind somit kranzförmig so befestigt, daß sie zunächst in horizontaler Richtung radial nach innen bis über die Mittelachse des Verteiltrichters hinaus und dann bogenförmig nach abwärts gerichtet sind.

In einem Abstand von den federnden Drähten 16 auf der der Ausgangsöffnung 8 zugewandten Seite des ersten Abschnittes 5 sind unterhalb des Kranzes der Federdrähte in Umfangsrichtung versetzt ebenfalls kranzförmig angeordnete Düsen 17 vorgesehen. Diese sind mit einer nicht gezeigten Luftdruckquelle verbunden. Die Luftdruckquelle ist mit der Steuerung 3 verbunden. Gleichermaßen ist mit der Steuerung 3 der Antrieb 15 für die Öffnungs- und Schließbewegung des Bereitstellungsbehälters 9 verbunden. Die Steuerung 3 ist so ausgebildet, daß in einem voreingestellten zeitlichen Abstand nach der Betätigung des Antriebes 15 zum Öffnen des Bereitstellungsbehälters 9 über die Düsen 17 ein Druckluftstoß in das Innere einbringbar ist.

In dem oben beschriebenen Ausführungsbeispiel sind acht in Umfangsrichtung verteilte federnde Drähte 16 und acht in Umfangsrichtung verteilte Düsen 17 vorgesehen.

Am ausgangsöffnungsseitigen Ende ist ein Trichterelement 18 vorgesehen, welches mit dem ausgangsseitigen Ende des zweiten Abschnittes so verbunden ist, daß es koaxial zu dem zweiten Abschnitt auf- und abbewegbar ist. Das Trichterelement weist auf seinem der Zufuhröffnung 7 abgewandten Rand eine Form und Größe auf, die der Form und Größe des zu beschickenden Gegenstandes, also beispielsweise dem Inneren eines mit einem Rand versehenen schematisch angedeuteten Pizzabodens 19 auf. Das Trichterelement 18 kann auf die mit Produkt zu beaufschlagende Unterlage 19 direkt aufgesetzt oder knapp darüber positioniert werden.

Im weiteren wird der Betrieb beschrieben. Nachdem der zu beschickende Boden, in dem gezeigten Ausführungsbeispiel als Pizzoboden 19 bezeichnet, in die Beschickungsposition gebracht ist, ist das Trichterelement 18 in Richtung des Pfeiles 20 so nach unten bewegt, daß der freie Rand des Trichterelementes 18 unmittelbar über dem zu beschickenden Pizzaboden 19 liegt. Es wird über eine Wiegeeinrichtung dem Bereitstellungsbehälter 9 eine genaue Gewichtsportion in mehr oder weniger klumpiger Form zugeführt. Diese Portion wird in einem bestimmten Zeitpunkt des Arbeitstaktes über die Zuführöffnung 7 in das Innere des Gehäuses 4 zugeführt. Das Produkt fällt nach unten auf die federnden Drähte 16, wodurch die mehr oder weniger kompakte Form des Materials zerbrochen und weitgehend symmetrisch zur Symmetrieachse verteilt wird und nach unten fällt. Die Steuerung 3 ist so ausgebildet, daß zum Zeitpunkt des Durchfallens des mit den Düsen 17 umgebenen Abschnittes ein kräftiger Luftstoß durch die Düsen in das Innere zugeführt wird, der durch Verwirbeln eine weitere Auflösung der Bruchstücke und gleichmäßige Verteilung des Produktes im Gehäuseinneren bewirkt. Das fein verteilte Produkt landet somit fein und gleichmäßig verteilt auf der zu beschickenden Unterlage 19, wobei der Rand entsprechend der Kontur des heb- und senkbaren Trichterelementes 18 frei bleibt.

In der oben beschriebenen Ausführungsform sind die federnden Drähte 16 länger als der Durchmesser des ersten Abschnittes im Bereich der federnden Drähte gewählt. Alternativ kann auch eine Ausführungsform gewählt werden, bei der die federnden Drähte etwas kürzer als der entsprechende Durchmesser gewählt werden, so daß die freien Enden gerade nicht an der Gehäusewandung anliegen. Entscheidend ist, daß die Anordnung der Federdrähte so gewählt ist, daß bei dem Aufprallen von zu verteilendem Gut eine ausreichende Wippbewegung zum Zerteilen von Brocken ausreicht.

## Patentansprüche

1. Verteilvorrichtung zur gleichmäßigen Verteilung einer vorbestimmten Menge eines Produktes, das aus zur Verklumpung neigenden diskreten Teilchen besteht, auf einer vorgebenen Fläche, mit
einem sich in Arbeitsstellung symmetrisch zur Fallinie erstreckenden einen Vereinzelungsabschnitt bildenden Verteiltrichter aus einem Gehäuse (4) mit einer oben liegenden Zuführöffnung (7) und einer dieser gegenüberliegenden Ausgangsöffnung (8) und einer Anzahl von auf der Innenseite des oberen Teiles des Verteiltrichters (3) kranzförmig befestigten länglichen Federelementen (16).

2. Verteilvorrichtung nach Anspruch 1, gekennzeichnet durch eine Mehrzahl von unterhalb der Federelemente (16) kranzförmig angeordneten und nach innen gerichteten Düsen (17) zum Zuführen von Luft.

3. Verteilvorrichtung nach Anspruch 1 oder 2, dadurch gekennzeichnet, daß die Gehäusewand einen eingangsseitigen ersten Abschnitt (5) und einen damit koaxial zusammengesetzten zweiten Abschnitt (6) aufweist, die beide kegelstumpfartig ausgebildet und mit ihrem jeweiligen Basisteil miteinander verbunden sind.

4. Verteilvorrichtung nach einem der Ansprüche 1 bis 3, dadurch gekennzeichnet, daß oberhalb der Zufuhröffnung (7) und vorzugsweise koaxial zu dem Gehäuse ein als Zwischenbehälter dienender Bereitstellungsbehälter (9) vorgesehen ist.

5. Verteilvorrichtung nach einem der Ansprüche 1 bis 4, dadurch gekennzeichnet, daß ausgangsseitig ein koaxial zu dem Gehäuse (4) auf- und abbewegbares Trichterelement (18) mit einem vorbestimmten Ausgangsquerschnitt vorgesehen ist.

6. Verteilvorrichtung nach einem der Ansprüche 1 bis 5, dadurch gekennzeichnet, daß Federelemente (16) als Federdrähte ausgebildet sind.

7. Verteilvorrichtung nach Anspruch 6, dadurch gekennzeichnet, daß die Federdrähte eine Länge aufweisen, die größer als der Gehäusequerschnitt in dem sie aufnehmenden Bereich ist.

8. Verteilvorrichtung nach einem der Ansprüche 5 bis 7, dadurch gekennzeichnet, daß eine Steuerung (3) vorgesehen ist, die mit dem Antrieb des Trichterelementes (18) zum Ansteuern seiner Öffnungs- und Schließbewegung und mit einer Druckluftquelle zum Beaufschlagen der Düsen (17) mit Druckluft verbunden sind und so ausgebildet ist, daß das Beaufschlagen mit Druckluft um eine vorbestimmte Zeit verzögert zur Öffnungsbewegung des Trichterelementes (18) erfolgt.
